# EUROPÄISCHE PATENTANMELDUNG

(11) **EP 1 547 749 A1**
(43) Veröffentlichungstag der Anmeldung: **29.06.2005**
(21) Anmeldenummer: 03293266.7
(22) Anmeldetag: 19.12.2003
(51) Int. Cl.: B29C 45/76, B29C 45/84, B29C 33/76

(54) **Vorrichtung und Verfahren zur Überwachung des Brechens von Einsätzen in Giessformen**

(71) Anmelder: Behr France S.A.R.L., 68250 Rouffach (FR)
(72) Erfinder: Beringer, Hervé, 68127 Oberhergheim (FR); Dornstetter, Norbert, 68127 Oberhergheim (FR)
(74) Vertreter: Grauel, Andreas, Dr.

(57) **Zusammenfassung**

Die Erfindung betrifft eine Vorrichtung zum Gießen, insbesondere Spritzgießform, die einen in Vergleich mit seinem Querschnitt länglichen Bereich aufweist, der sich in den Innenraum der Gießform (1) erstreckt, um eine Aussparung in der gegossenen Form zu bilden, wobei eine Überwachungsvorrichtung (21) vorgesehen ist, die ein Brechen des länglichen Bereichs überwacht, sowie ein entsprechendes Verfahren zum Gießen.

## Beschreibung

Die Erfindung betrifft eine Vorrichtung zum Gießen gemäß dem Oberbegriff des Anspruchs 1.

Beim Gießen, insbesondere beim Spritzgießen, wobei Formen mit Aussparungen oder Öffnungen mit zumindest bereichsweise kleinen Durchmessern hergestellt werden, treten gelegentlich Beschädigungen an der Gießform oder an in'Bereichen derselben verwendeten Einsätzen, die insbesondere für komplizierte Konturen verwendet werden, auf. Dies ist insbesondere bei dünnen, langen Spitzen von Einsätzen der Fall, die auf Grund der Härte und hiermit verbundenen Sprödigkeit häufig brechen, wenn die Gießform mit Druck schnell gefüllt wird. Die Verwendung zäherer Materialien löst dieses Problem nur bedingt, da in diesem Fall die Gießform sich verformt anstelle zu brechen, so dass der Guß eine unzulängliche Genauigkeit aufweist.

Eine derartige Vorrichtung zum Gießen lässt daher insbesondere in Hinblick auf die Betriebssicherheit noch Wünsche offen.

Es ist Aufgabe der Erfindung, eine verbesserte Vorrichtung zum Gießen zur Verfügung zu stellen.

Diese Aufgabe wird gelöst durch eine Vorrichtung zum Gießen mit den Merkmalen des Anspruchs 1. Vorteilhafte Ausgestaltungen sind Gegenstand der Unteransprüche.

Erfindungsgemäß ist eine Vorrichtung zum Gießen, insbesondere Kunststoff-Spritzgießform, vorgesehen, die einen in Vergleich mit seinem Querschnitt länglichen Bereich aufweist, der sich in den Innenraum der Gießform erstreckt, um eine Aussparung in der gegossenen Form zu bilden, wobei eine Überwachungsvorrichtung vorgesehen ist, die ein Brechen des länglichen Bereichs überwacht. Durch eine derartige Überwachungsvorrichtung kann sichergestellt werden, dass keine Teile der Gießform im gegossenen Teil verbleiben und nachfolgend gegossene Teile eine unzureichende Aussparung in Folge des abgebrochenen Teils der Gießform haben. Somit lassen sich Fehler rechtzeitig erkennen und die Zahl der fehlerhaften Teile kann minimiert werden.

Die Überwachungsvorrichtung weist bevorzugt einen Drucksensor, einen Strahlungssensor, einen Magnetsensor und/ einen elektrischen Sensor auf. Hierbei ist der entsprechende Sensor derart in die Gießform integriert, dass der kritische Bereich beispielsweise mittels eines in diesem Bereich herrschenden Drucks (z.B. Druckänderung in einem Hohlraum), einem Lichtstrahl oder sonstiger Strahlung (z.B. reflektierter Lichtstrahl, eintretendes Licht oder eintretende Wärmestrahlung), eines Magnetfelds (z.B. Änderung desselben), eines elektrischen Feldes oder eines Stromflusses (z.B. Unterbrechung eines Stromkreises) überwacht wird.

Bevorzugt ist für die Überwachung im länglichen Bereich eine Bohrung vorgesehen. Diese Bohrung ist an ihrem gießformseitigen Ende geschlossen, wobei die Bohrung sowohl als Sackloch-Bohrung oder als nachträglich verschlossene Bohrung ausgebildet sein kann.

Die Bohrung ist vorzugsweise mit einem Fluid gefüllt. Im Falle einer Drucküberwachung sind Druckluft oder Hydraulikflüssigkeiten bevorzugt, jedoch können auch andere Gase, Flüssigkeiten oder Gemische oder ein Vakuum verwendet werden. Im Falle einer Magnetfeld-Überwachung sind entsprechend geeignete Flüssigkeiten, ggf. mit Feststoffen versetzt, geeignet. Die Bohrung kann, insbesondere im Falle einer Überwachung mittels Reflektion eines Lichtstrahls, entsprechend ausgestaltet sein, insbesondere kann am Ende der Bohrung eine verspiegelte Fläche vorgesehen sein. Die Bohrung kann auch zumindest bereichsweise beschichtet sein, so dass beispielsweise ein elektrischer Stromkreis im Falle eines Bruch des länglichen Bereichs unterbrochen wird.

Der längliche Bereich ist vorzugsweise als in die Gießform eingesetzter Einsatz ausgebildet, der Teil der Vorrichtung zum Gießen ist. Die Ausbildung des kritischen, länglichen Bereichs als Einsatz hat den Vorteil, dass im Falle eines Bruchs, der in diesem Bereich am häufigsten vorkommt, nur der Einsatz ausgetauscht werden muss und der weitere Teil der Gießform weiterverwendet werden kann, so dass sich die Reparaturkosten in Grenzen halten und der Austausch schneller erfolgen kann, als wenn die gesamte Gießform ausgetauscht werden müsste, und somit die Ausfallzeiten reduziert werden können.

Der längliche Bereich weist bevorzugt einen kreisförmigen Querschnitt auf, wobei der Abguss desselben insbesondere zum Einschrauben von Befestigungsschrauben ohne zusätzlich erforderlichen Bohrvorgang dient.

Vorzugsweise ist ein Anschluss für ein Kabel oder einen Schlauch vorgesehen, welcher Teil der Überwachungsvorrichtung ist. Dabei kann der Anschluss durch einen Teil einer Schnellverschluss-Kupplung zum schnellen Anschließen einer Druckleitung gebildet werden. Im Falle eines Kabels kann ein entsprechender Stecker vorgesehen sein.

Die Überwachungsvorrichtung kann eine Vorrichtung zur Druckerzeugung aufweisen, wobei im Falle einer Druckluftüberwachung hierfür das üblicherweise vorhandene Druckluftsystem verwendet werden kann, ggf. unter Veränderung des Druckniveaus.

Die Überwachungsvorrichtung weist vorzugsweise ein Fluid, insbesondere Luft, auf, das sich in einem Innenraum (Hohlraum) der Gießform befindet, wobei es vorzugsweise unter einem Druck steht, der sich vom in der Gießform herrschenden Druck unterscheidet. Anstelle von Luft kann ein beliebiges anderes Gas oder Gasgemisch, sowie beliebige Flüssigkeiten verwendet werden.

Im Folgenden wird die Erfindung anhand mehrerer Ausführungsbeispiele unter Bezugnahme auf die Zeichnung im Einzelnen erläutert. In der Zeichnung zeigen:

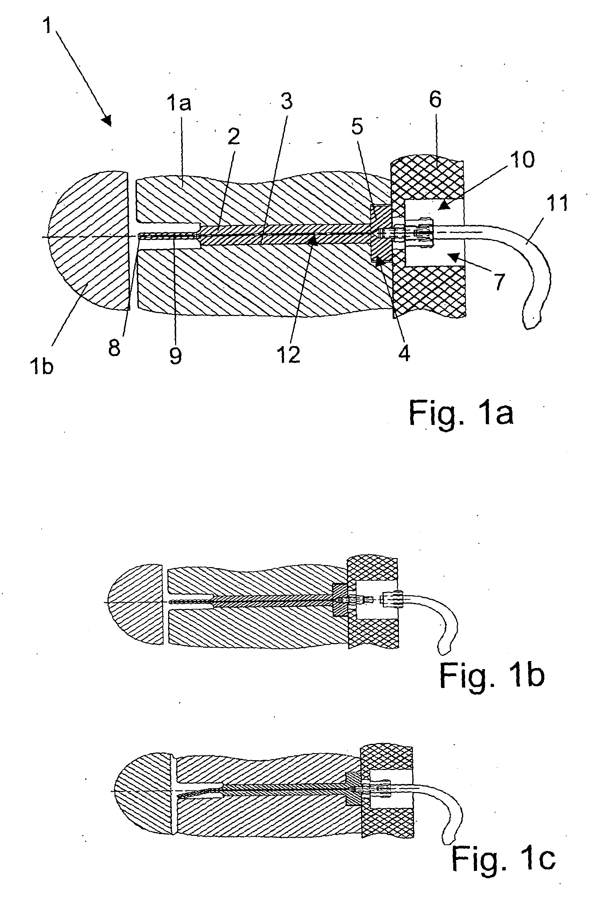

- Fig. 1a: eine geschnittene Darstellung einer Gießform mit einem Einsatz gemäß dem ersten Ausführungsbeispiel,
- Fig. 1b: eine Fig. 1a entsprechende Ansicht vor dem Anschließen der Drucküberwachung,
- Fig. 1c: eine Fig. 1a entsprechende Ansicht mit gebrochenem Einsatz,
- Fig. 2: eine geschnittene Darstellung einer Gießform mit einem Einsatz gemäß dem zweiten Ausführungsbeispiel,
- Fig. 3: eine geschnittene Darstellung einer Gießform mit einem Einsatz gemäß dem dritten Ausführungsbeispiel, und
- Fig. 4: eine geschnittene Darstellung einer Gießform mit einem Einsatz gemäß dem vierten Ausführungsbeispiel,
- Fig. 5: eine schematische Darstellung einer Überwachungsvorrichtung, und
- Fig. 6: ein Flussdiagramm, das den Ablauf der Überwachung zeigt.

Eine Gießform 1 zum Kunststoff-Spritzgießen mit einem Oberteil 1a und einem Unterteil 1b weist einen in das Oberteil 1a integrierten Einsatz 2 auf, welcher Teil der Gießform 1 ist. Hierbei ist in einem Bereich des Oberteils 1a der Gießform 1 eine Durchgangsbohrung 3 vorgesehen, in welcher der Einsatz 2 aufgenommen ist. Der Einsatz 2 ist im Bereich der Durchgangsbohrung 3 zylinderförmig ausgebildet, wobei sein Außendurchmesser dem Innendurchmesser der Durchgangsbohrung 3 entspricht. Am äußeren Ende der Durchgangsbohrung 3 ist ein Absatz 4 vorgesehen, in welchem ein Kopf 5 des Einsatzes 2 aufgenommen ist. Die spielfreie Fixierung erfolgt mittels eines Deckels 6 (nur teilweise dargestellt), in dem eine Zugangsöffnung 7 zum Einsatz 2 vorgesehen ist.

Der Einsatz 2 weist an seinem in die Gießform 1 ragenden inneren Ende 8 einen verjüngten, über die Durchgangsbohrung 3 überstehenden Bereich auf, welcher die Negativform der zu gießenden Gestalt hat. Vorliegend ist dieser verjüngte Bereich zylinderförmig ausgebildet, wodurch sich in der zu gießenden Gestalt eine zylinderförmige Aussparung in Form eines Sackloches ergibt, wie sie beispielsweise zum Einschrauben von Befestigungsschrauben erforderlich ist.

Der Einsatz 2 weist eine Bohrung 9 auf, welche mittig entlang seiner Längsachse verläuft und am inneren Ende des Einsatzes 2 endet, wobei sie vorliegend nach Fertigung der Bohrung 9 verschlossen ist. Sie kann jedoch auch als Sackloch-Bohrung ausgebildet sein.

An seinem äußeren Ende weist der Einsatz 2 einen ersten Teil eines Pneumatik-Anschlusses 10 auf, der wie die Bohrung 9 Teil einer Überwachungsvorrichtung ist, von der in der Zeichnung ferner ein Ende des Schlauchs 11 und der zweite Teil des Pneumatik-Anschlusses 10 (Schnellverschluss-Kupplung) dargestellt sind. Über den Schlauch 11 ist die Bohrung 9 mit einer Vorrichtung zur Druckerzeugung verbunden, vorliegend einem Zylinder, der einen Überdruck - verglichen mit dem in der Gießform zu erwartenden Druck - zur Verfügung stellt. Ferner ist Teil der Überwachungsvorrichtung ein Druck-Sensor (nicht dargestellt), welcher den im Innenraum 12, d.h. im Schlauch 11 und der Bohrung 9, herrschenden Druck laufend ermittelt und an eine Auswerteeinheit übermittelt, welche denselben überwacht und im Falle einer Druckänderung, vorliegend insbesondere im Falle eines Druckabfalls, den Gießvorgang stoppt sowie ein entsprechendes Warnsignal veranlasst.

Die Funktion der Überwachungsvorrichtung ist Folgende: Mittels der Vorrichtung zur Druckerzeugung wird Luft, die sich im Zylinder, im damit verbundenen Schlauch 11 und der Bohrung 9 befindet, verdichtet, so dass in dem durch den Zylinder, den Schlauch 11 und die Bohrung 9 gebildeten Innenraum 12 ein höherer Druck herrscht, als beim Gießvorgang in der Gießform zu erwarten ist. Dieser Druck wird über eine Mehrzahl von Gießzyklen aufrecht erhalten.

Bricht der Einsatz 2 bei einem Füllvorgang, so tritt aus dem gebildeten Spalt Luft auf Grund des im Innenraum 12 herrschenden Überdrucks in die Gießform 1 aus, so dass der Druck abfällt. Die Druckänderung wird anhand der laufend an die Auswerteeinheit übermittelten Druckwerte von derselben ermittelt, so dass die Überwachungsvorrichtung ein entsprechendes Wansignal abgibt und der Gießvorgang gestoppt wird. Zur Reparatur kann der Einsatz 2 einfach ausgetauscht und der neue Einsatz 2 wieder angeschlossen werden.

Gemäß einer Betriebsvariante wird vor oder während jedem Gießvorgang die Vorrichtung zur Druckerzeugung betätigt und anschließend wird der Druck im Innenraum 12 wieder abgesenkt.

Als Betriebsmedium im Innenraum 12 kann ein beliebiges Fluid verwendet werden. Bevorzugt handelt es sich hierbei um Luft oder ein anderes Gas/gemisch, jedoch können auch Flüssigkeiten verwendet werden, wie bspw. Wasser, Öl oder eine beliebige andere Hydraulik-Flüssigkeit.

An Stelle eines Überdrucks kann die Vorrichtung zur Druckerzeugung auch ein Vakuum (oder einen deutlich geringeren Druck als in der Gießform zu erwarten ist) erzeugen, so dass keine Luft aus dem Einsatz im Falle eines Bruches in die Gießform ausströmt, sondern Luft und/oder Material aus der sich füllenden Gießform über den Riss in den Innenraum 12 einströmt, so dass der Druck im Innenraum 12 ansteigt.

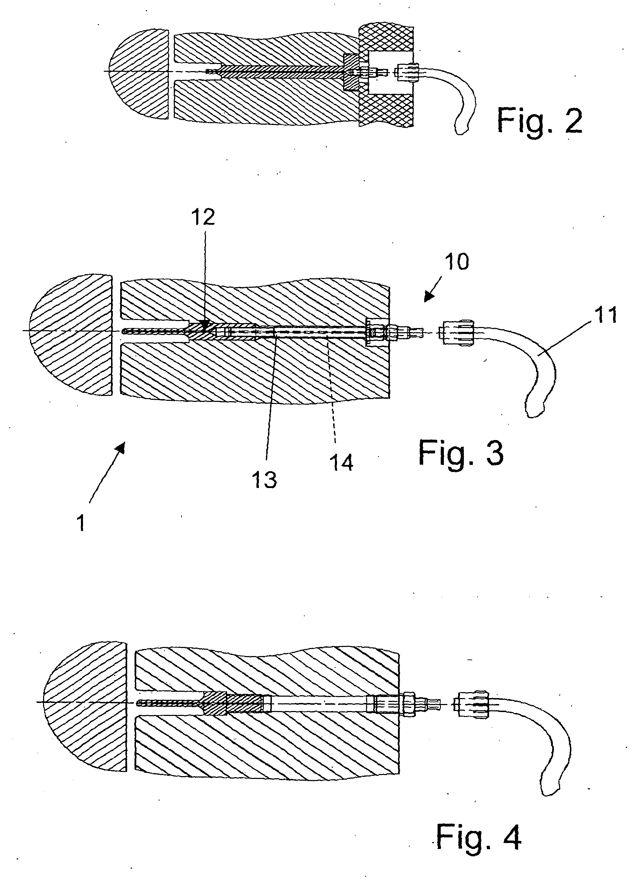

In Fig. 2 ist ein zweites Ausführungsbeispiel dargestellt, das eine Variante des Einsatzes mit einem relativ kurzen über die Durchgangsbohrung überstehenden Bereich zeigt. Ansonsten entspricht das zweite Ausführungsbeispiel dem zuvor beschriebenen ersten Ausführungsbeispiel und auch die verschiedenen Betriebsvarianten sind hierbei, wie auch bei den im Folgenden unter Bezugnahme auf die Zeichnung dargestellten Ausführungsbeispielen, möglich.

Der Einsatz 2 gemäß dem in Fig. 3 dargestellten dritten Ausführungsbeispiel wird nicht von außen durchgeschoben, sondern von dem Innenraum der Gießform 1 eingeführt und mittels eines von außen eingeführten Bolzens 13 befestigt, so dass kein Deckel erforderlich ist, sondern vielmehr eine entsprechende Ausgestaltung des Teils des Anschlusses 10, ggf. mit einer Unterlegscheibe, ausreicht. Der Bolzen 13 weist eine Durchgangsbohrung 14 auf, die, wie die Bohrung 9 und der Schlauch 11, Teil des Innenraums 12 ist, in dem ein Über- oder Unterdruck herrscht.

Fig. 4 zeigt das vierte Ausführungsbeispiel, gemäß dem der Einsatz 2 und der gießformseitige Teil des Anschlusses 10 nicht miteinander verbunden sind, d.h. Die Durchgangsbohrung 3 ist in ihrem mittleren Bereich frei und somit in diesem Bereich Teil des Innenraums 12. Der Einsatz 2 wie auch der Teil des Anschlusses 10 sind in die Gießform 1 eingeschraubt und somit mit ihr lösbar verbunden.

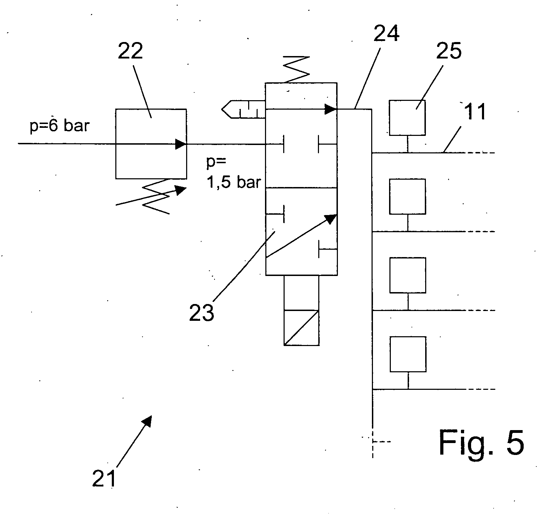

In Fig. 5 ist eine Überwachungsvorrichtung 21 dargestellt, mittels der eine Mehrzahl von kritischen Bereichen, wie insbesondere von den oben genannten Einsätzen, gleichzeitig überwacht werden kann. Hierbei wird ein Fluid, vorliegend Druckluft, das einen Druck von 6 bar hat und von der allgemeinen Druckluftversorgung kommt, mittels eines Druckreglers 22 auf einen Druck von 1,5 bar entspannt. Ein Elektro-Ventil 23 überwacht den Druck in der zentralen Zuführleitung 24, welche sich zu den einzelnen Überwachungsstellen in eine Mehrzahl von Druckleitungen und/oder Schläuchen 11 verzweigt. Gemäß diesem Ausführungsbeispiel bildet somit die allgemeine Druckluftversorgung in Verbindung mit dem den Druck reduzierenden Elektro-Ventil 23 die Vorrichtung zur Druckerzeugung. An jedem der Druckleitungen bzw. Schläuche 11 ist ein Druckwächter 25 (Drucksensor) vorgesehen, der den Druck im der entsprechenden Druckleitung und somit auch im Einsatz 2 überwacht.

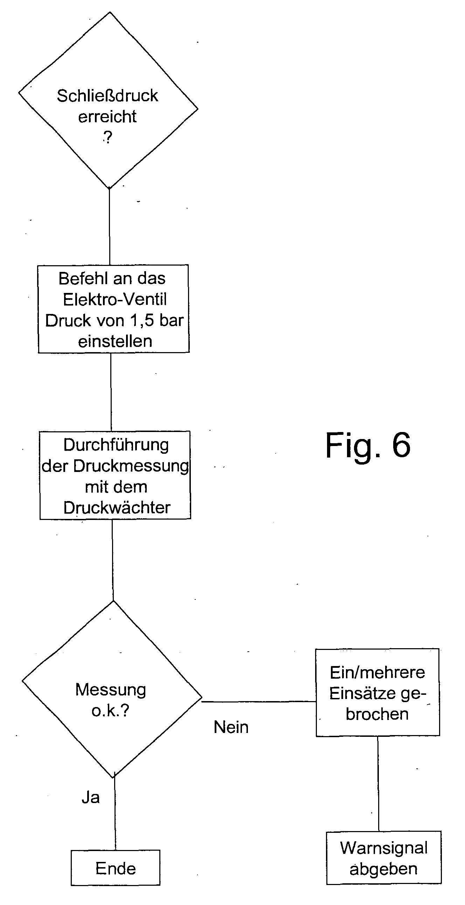

Wie im in Fig. 6 dargestellten Flussdiagramm beschrieben, wird, sobald der Schließdruck erreicht ist, wird überprüft, ob das Elektro-Ventil 23 einen Mess-Druck von 1,5 bar in der nachfolgenden Zuführleitung 24 zur Verfügung stellt. Ist dies der Fall, so erfolgt eine entsprechende Abfrage der Druckwächter 25. Herrscht an einem oder mehreren der Druckwächter 25 nicht der entsprechende Druck, d.h. 1,5 bar, so erfolgt eine Fehlermeldung, dass ein oder mehrere Einsätze 2 gebrochen sind. Herrscht an allen Druckwächtern 25 ein Druck von 1,5 bar, so erfolgt die Meldung, dass der Gießvorgang erfolgreich war und der Überwächungszyklus ist beendet.

### Bezugszeichenliste

1 Gießform
2 Einsatz
3 Durchgangsbohrung
4 Absatz
5 Kopf
6 Deckel
7 Zugangsöffnung
8 Ende
9 Bohrung
10 Anschluss
11 Schlauch
12 Innenraum
13 Bolzen
14 Durchgangsbohrung Bolzen
21 Überwachungsvorrichtung
22 Druckregler
23 Elektro-Ventil
24 Zuführleitung
25 Druckwächter, -sensor

## Patentansprüche

1. Vorrichtung zum Gießen, insbesondere Spritzgießform, die einen in Vergleich mit seinem Querschnitt länglichen Bereich aufweist, der sich in den Innenraum der Gießform (1) erstreckt, um eine Aussparung in der gegossenen Form zu bilden, **dadurch gekennzeichnet, dass** eine Überwachungsvorrichtung (21) vorgesehen ist, die ein Brechen des länglichen Bereichs überwacht.

2. Vorrichtung zum Gießen nach Anspruch 1, **dadurch gekennzeichnet, dass** die Überwachungsvorrichtung (21) einen Drucksensor (25), einen Strahlungssensor, einen Magnetsensor und/oder einen elektrischen Sensor aufweist.

3. Vorrichtung zum Gießen nach Anspruch 1 oder 2, **dadurch gekennzeichnet, dass** im länglichen Bereich eine Bohrung (9) vorgesehen ist.

4. Vorrichtung zum Gießen nach Anspruch 3, **dadurch gekennzeichnet, dass** die Bohrung (9) an ihrem gießformseitigen Ende geschlossen ist.

5. Vorrichtung zum Gießen nach einem der vorhergehenden Ansprüche, **dadurch gekennzeichnet, dass** der längliche Bereich als Einsatz (2) ausgebildet ist, der Teil der Vorrichtung zum Gießen (1) ist.

6. Vorrichtung zum Gießen nach einem der vorhergehenden Ansprüche, **dadurch gekennzeichnet, dass** der längliche Bereich einen kreisförmigen Querschnitt aufweist.

7. Vorrichtung zum Gießen nach einem der vorhergehenden Ansprüche, **dadurch gekennzeichnet, dass** eine Bohrung (9) mittig im länglichen Bereich und in seiner Längserstreckung verlaufend angeordnet ist.

8. Vorrichtung zum Gießen nach einem der vorhergehenden Ansprüche, **dadurch gekennzeichnet, dass** ein Anschluss (10) für ein Kabel oder einen Schlauch (1.1) vorgesehen ist, welcher Teil der Überwachungsvorrichtung (21) ist.

9. Vorrichtung zum Gießen nach einem der vorhergehenden Ansprüche, **dadurch gekennzeichnet, dass** die Überwachungsvorrichtung (21) eine Vorrichtung zur Druckerzeugung aufweist.

10. Vorrichtung zum Gießen nach Anspruch 9, **dadurch gekennzeichnet, dass** die Vorrichtung zur Druckerzeugung durch die allgemeine Druckluftversorgung gebildet ist, wobei der Druck abgesenkt werden kann.

11. Vorrichtung zum Gießen nach einem der vorhergehenden Ansprüche, **dadurch gekennzeichnet, dass** die Überwachungsvorrichtung ein Fluid aufweist, das sich in einem Innenraum (12) der Gießform (1) befindet, wobei es unter einem Druck steht, der sich vom in der Gießform (1) herrschenden Druck unterscheidet.

12. Verfahren zum Gießen, insbesondere zum Einspritzgießen, wobei zumindest während des Gießvorgangs eine Überwachung der Gießform (1) bezüglich des Auftretens von Brüchen in einem kritischen Bereich mittels einer Überwachungsvorrichtung (21) gemäß einem der Ansprüche 1 bis 11 erfolgt.

13. Verfahren nach Anspruch 12, **dadurch gekennzeichnet, dass** mittels eines oder mehrerer Sensoren der kritische Bereich der Gießform (1) überwacht wird, wobei die von dem oder den Sensoren ermittelten Messwerte auf Abweichungen über der Zeit überwacht werden.

14. Verfahren nach Anspruch 13, **dadurch gekennzeichnet, dass** die von dem oder den Sensoren ermittelten Messwerte auf Abweichungen über der Zeit überwacht werden.

15. Verfahren nach einem der Ansprüche 12 bis 15, **dadurch gekennzeichnet, dass** im zu überwachenden Bereich der Gießform (1) ein Hohlraum (12) vorgesehen ist, in dem ein Fluid mit einem Über- oder Unterdruck verglichen mit dem im Inneren der Gießform (1) herrschenden Druck vorgesehen ist, wobei Druckänderungen im Fluid überwacht werden.

16. Verfahren nach Anspruch 15, **dadurch gekennzeichnet, dass** als Fluid Druckluft verwendet wird, die von der allgemeinen Druckluftversorgung zur Verfügung gestellt wird.
